# FASCICULE DE BREVET EUROPEEN

(11) **EP 1 972 821 B1**
(45) Date de publication et mention de la délivrance du brevet: **07.10.2009**
(21) Numéro de dépôt: 08101846.7
(22) Date de dépôt: 21.02.2008
(51) Int. Cl.: F16D 55/226

(54) **Frein à disque comportant un étrier muni d'un joint cache-poussière amélioré**
Bremssattel mit Dichtmanschette
Brake calliper with a dust boot

(30) Priorité: 22.03.2007 FR 0702102
(43) Date de publication de la demande: 24.09.2008
(73) Titulaire: Robert Bosch GmbH, 70469 Stuttgart (DE)
(72) Inventeur: Lelièvre, Bruno, 92320 Chatillon s/Bagneux (FR); Maury, Jean-Marc, 77178 Saint Pathus (FR)
(74) Mandataire: Hurwic, Aleksander Wiktor

(56) Documents cités:
- EP-A- 0 108 663
- WO-A-97/01045
- DE-A1- 3 902 788
- GB-A- 2 165 902
- US-A- 4 431 090

## Description

L'invention concerne un frein à disque pour un véhicule automobile. Un tel frein est connu du document US-A-4 431 090.

L'invention concerne plus particulièrement un frein à disque pour un véhicule automobile, du type qui comporte au moins un disque et un étrier de freinage associé au disque, qui reçoit deux patins de frein opposés destinés à être serrés contre des faces opposées du disque, et dans un alésage duquel est monté coulissant au moins un piston qui est susceptible de solliciter au moins un patin de frein associé, et du type qui comporte un soufflet cache-poussière, qui est fixé à l'étrier et qui est traversé de manière étanche par l'extrémité du piston pour éviter que des poussières ne pénètrent dans l'alésage associé au piston, et du type dans lequel le soufflet comporte au moins à une première extrémité un premier bourrelet dont une première portée intérieure de fixation annulaire est reçue dans une gorge annulaire formée à la périphérie de l'extrémité du piston, et à une seconde extrémité opposée un second bourrelet dont une seconde portée extérieure de fixation annulaire est reçue dans une gorge externe de l'étrier entourant le piston.

On connaît de nombreux exemples de freins à disque de ce type.

La suppression de l'amiante dans les garnitures de patins de frein et la généralisation des systèmes de freinage à haute pression ont depuis quelques années provoqué une élévation sensible de la chaleur dégagée par le frottement des patins de freins contre les disques lors des freinages.

Une conséquence en est une propagation accrue de la chaleur dans tous les organes des freins à disque, et notamment dans l'étrier.

Or, les soufflets cache-poussière qui équipent les étriers sont généralement réalisés en un matériau élastomère qui supporte difficilement les températures élevées. Un tel soufflet qui est soumis régulièrement à des températures élevées finit par se désagréger et n'assure plus son rôle de protection du piston.

Cette désagrégation du soufflet s'accélère d'autant plus que l'usure du patin de frein est prononcée, car dans ces conditions le piston sort de son alésage pour compenser la perte d'épaisseur du patin de frein et le soufflet se déploie en créant autour du piston une cavité propre à accumuler la chaleur dans le soufflet.

Une fois le soufflet détruit, l'étrier peut alors être amené à se gripper, ce qui peut causer une dégradation importante de performances du frein à disque et nuire à la sécurité du véhicule qui en est équipé et à la sécurité de ses occupants.

L'invention remédie à cet inconvénient en proposant une protection thermique pour le soufflet cache-poussière.

Dans ce but, l'invention propose un frein à disque du type décrit précédemment, caractérisé en ce que le premier bourrelet comporte au moins un premier insert, emprisonné dans le matériau élastomère du soufflet, qui forme un écran thermique à la chaleur dégagée lors du freinage pour éviter l'accumulation de chaleur à l'intérieur du soufflet, notamment lorsqu'il est étendu dans une position de sollicitation du patin.

Selon d'autres caractéristiques de l'invention :
- le second bourrelet comporte au moins un second insert de renfort destiné à rigidifier la seconde portée extérieure annulaire pour sa fixation dans la gorge externe de l'étrier,
- le premier insert comporte une bague qui comporte un premier tronçon en forme de rondelle d'orientation transversale formant l'écran thermique et qui comporte un second tronçon tubulaire d'orientation axiale qui est destiné à rigidifier la première portée intérieure de fixation annulaire du bourrelet pour sa fixation dans la gorge annulaire de l'extrémité du piston,
- le premier tronçon est d'un diamètre sensiblement égal diamètre de la gorge externe de l'étrier,
- le second insert comporte une bague tubulaire d'orientation axiale qui est destinée à rigidifier la seconde portée extérieure de fixation annulaire du bourrelet pour sa fixation dans la gorge externe de l'étrier,
- les inserts sont réalisés en un matériau métallique.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective d'un étrier de frein pour un frein à disque selon l'invention,
- la figure 2 est une vue en coupe axiale de l'étrier de la figure 1 dans une position rétractée du piston,
- la figure 3 est une vue en coupe axiale de l'étrier de la figure 1 dans une position étendue du piston,

Dans la description qui va suivre, des éléments identiques, similaires ou analogues seront désignés par les mêmes chiffres de référence.

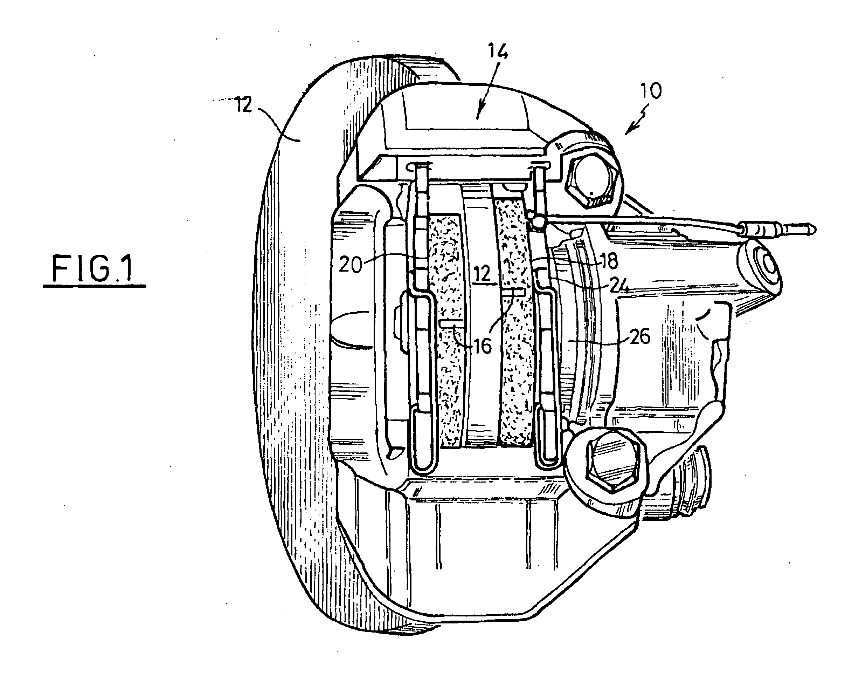

On a représenté aux figures 1 à 3 un frein à disque 10 pour un véhicule automobile.

De manière connue, le frein à disque 10 comporte au moins un disque 12 et un étrier 14 de freinage associé au disque, qui reçoit deux patins de frein 16 opposés destinés à être serrés contre des faces opposées 18, 20 du disque 12.

L'étrier 14 comporte un alésage 22 dans lequel est monté coulissant au moins un piston 24 qui est susceptible de solliciter au moins un patin 16 de frein associé. L'étrier 14 comporte un soufflet 26 cache-poussière, qui est fixé à l'étrier 14 et qui est traversé de manière étanche par l'extrémité 28 du piston 24 pour éviter que des poussières ne pénètrent dans l'alésage 22 associé au piston 24.

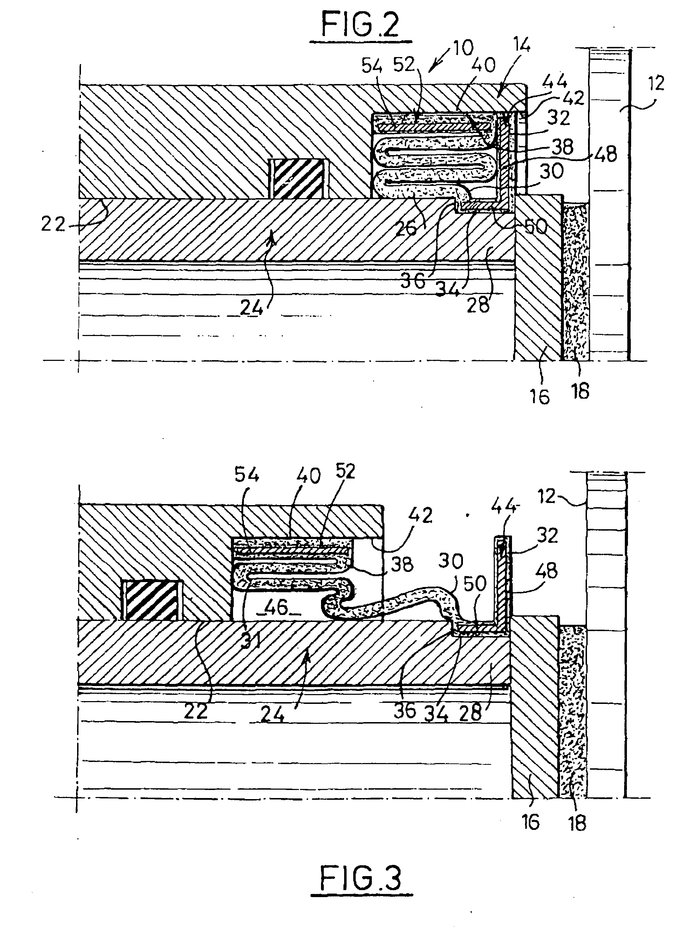

Comme l'illustrent plus particulièrement les figures 2 et 3, le soufflet 26 comporte au moins à une première extrémité 30 un premier bourrelet 32 dont une première portée intérieure 34 de fixation annulaire est reçue dans une gorge annulaire 36 formée à la périphérie de l'extrémité 28 du piston 24.

A une seconde extrémité 31 opposée, le soufflet 26 comporte un second bourrelet 38 dont une seconde portée extérieure 40 de fixation annulaire est reçue dans une gorge externe 42 de l'étrier 14 entourant le piston 24.

Conformément à l'invention, le premier bourrelet 32 comporte au moins un premier insert 44 formant un écran thermique à la chaleur dégagée lors du freinage pour éviter l'accumulation de chaleur à l'intérieur du soufflet 26, notamment lorsqu'il est étendu dans une position de sollicitation du patin 12 comme représenté à la figure 3, et qu'il délimite ainsi une cavité 46.

Plus particulièrement, le premier insert 44 comporte une bague qui comporte un premier tronçon 48 en forme de rondelle d'orientation transversale formant l'écran thermique. Ce premier insert 44 comporte par ailleurs un second tronçon tubulaire 50 d'orientation axiale, accolé au premier tronçon 48, qui est destiné à rigidifier la première portée 34 intérieure de fixation annulaire du bourrelet 32 pour sa fixation dans la gorge annulaire 36 de l'extrémité 28 du piston 24.

Dans le mode de réalisation préféré de l'invention, le premier tronçon 48 est d'un diamètre sensiblement égal au diamètre de la gorge externe 42 de l'étrier 14. Cette configuration permet d'assurer, d'une part, une protection maximale du soufflet cache-poussière lorsque le soufflet occupe sa position rétractée de la figure 2, et d'autre part, une protection efficace maximale du soufflet cache-poussière lorsque le soufflet occupe sa position étendue de la figure 3 pour limiter l'exposition de la cavité 46 à la chaleur dégagée par le patin 16.

Une autre caractéristique importante de l'invention est que le second bourrelet 38 comporte au moins un second insert 52 de renfort destiné à rigidifier la seconde portée 40 extérieure annulaire pour sa fixation dans la gorge externe 42 de l'étrier 14.

Plus particulièrement, le second insert 52 comporte une bague 54 tubulaire d'orientation axiale qui est destinée à rigidifier la seconde portée 40 extérieure de fixation annulaire du bourrelet 38 pour sa fixation dans la gorge externe 42 de l'étrier 14.

De préférence, les inserts 44, 52 sont réalisés en un matériau métallique.

Par ailleurs, les inserts 44, 52 sont emprisonnés dans le matériau élastomère du soufflet 26 lors de sa fabrication par moulage. Cette configuration permet de garantir que les inserts 44, 52 ne s'échappent pas du soufflet 26.

L'invention permet donc d'augmenter la durée de vie d'un soufflet cache-poussière 26 d'un étrier de frein 24 de manière simple et efficace.

## Revendications

1. Frein à disque (10) pour un véhicule automobile, du type qui comporte au moins un disque (12) et un étrier (14) de freinage associé au disque, qui reçoit deux patins (16) de frein opposés destinés à être serrés contre des faces (18, 20) opposées du disque (12), et dans un alésage (22) duquel est monté coulissant au moins un piston (24) qui est susceptible de solliciter au moins un patin (16) de frein associé, et du type qui comporte un soufflet (26) cache-poussière, qui est fixé à l'étrier (14) et qui est traversé de manière étanche par l'extrémité (28) du piston (24) pour éviter que des poussières ne pénètrent dans l'alésage (22) associé au piston (24), et du type dans lequel le soufflet (26) comporte au moins à une première extrémité (30) un premier bourrelet (32) dont une première portée intérieure (34) de fixation annulaire est reçue dans une gorge annulaire (36) formée à la périphérie de l'extrémité (28) du piston (24), et à une seconde extrémité (31) opposée un second bourrelet (38) dont une seconde portée extérieure (40) de fixation annulaire est reçue dans une gorge externe (42) de l'étrier (14) entourant le piston (24),
**caractérisé en ce que** le premier bourrelet (32) comporte au moins un premier insert (44), emprisonné dans le matériau élastomère du soufflet (26), qui forme un écran thermique à la chaleur dégagée lors du freinage pour éviter l'accumulation de chaleur à l'intérieur du soufflet (26), notamment lorsqu'il est étendu dans une position de sollicitation du patin (24).

2. Frein à disque (10) selon la revendication précédente, **caractérisé en ce que** le second bourrelet (38) comporte au moins un second insert (52) de renfort destiné à rigidifier la seconde portée (40) extérieure annulaire pour sa fixation dans la gorge (42) externe de l'étrier (14).

3. Frein à disque (10) selon l'une des revendications 1 ou 2, **caractérisé en ce que** le premier insert (44) comporte une bague qui comporte un premier tronçon (48) en forme de rondelle d'orientation transversale formant l'écran thermique et qui comporte un second tronçon (50) tubulaire d'orientation axiale qui est destiné à rigidifier la première portée intérieure (34) de fixation annulaire du bourrelet (32) pour sa fixation dans la gorge annulaire (36) de l'extrémité (28) du piston (24).

4. Frein à disque (10) selon la revendication précédente, **caractérisé en ce que** le premier tronçon (48) est d'un diamètre sensiblement égal au diamètre de la gorge externe (42) de l'étrier (14).

5. Frein à disque (10) selon l'une des revendications 1 à 4, **caractérisé en ce que** le second insert (52) comporte une bague (54) tubulaire d'orientation axiale qui est destinée à rigidifier la seconde portée (40) extérieure de fixation annulaire du bourrelet (38) pour sa fixation dans la gorge externe (42) de l'étrier (14).

6. Frein à disque (10) selon l'une quelconque des revendications 2 à 5, **caractérisé en ce que** les inserts (44, 52) sont réalisés en un matériau métallique.

## Claims

1. Disc brake (10) for a motor vehicle, of the type which comprises at least one disc (12) and a brake caliper (14) associated with the disc, which holds two opposing brake pads (16) intended to be applied firmly against opposite faces (18, 20) of the disc (12), and in a bore (22) of which there is slidably mounted at least one piston (24) which is able to urge at least one associated brake pad (16), and of the type which comprises a dust boot (26) which is fixed to the caliper (14) and through which the end (28) of the piston (24) passes in a sealed manner to prevent dust from entering the bore (22) associated with the piston (24), and of the type in which the boot (26) comprises, at least at a first end (30), a first bead (32) of which an annular fixing interior first bearing surface (34) is housed in an annular groove (36) formed at the periphery of the end (28) of the piston (24) and, at an opposite second end (31), a second bead (38) of which an annular fastening exterior second bearing surface (40) is housed in an external groove (42) of the caliper (14) surrounding the piston (24),
**characterized in that** the first bead (32) comprises at least one first insert (44), imprisoned in the elastomeric material of the boot (26), which forms a heat shield against the heat given off under braking so as to prevent heat from building up inside the boot (26) particularly when it is stretched out in a position in which the pad (24) is urged.

2. Disc brake (10) according to the preceding claim,
**characterized in that** the second bead (38) comprises at least a reinforcing second insert (52) intended to stiffen the annular exterior second bearing surface (40) so that it can be fixed into the external groove (42) of the caliper (14).

3. Disc brake (10) according to one of Claims 1 and 2, **characterized in that** the first insert (44) comprises a ring which has a first portion (48) in the form of a transversely directed washer forming the heat shield and which comprises an axially directed tubular second portion (50) which is intended to stiffen the annular fixing interior first bearing surface (34) of the bead (32) so that it can be fixed into the annular groove (36) of the end (28) of the piston (24).

4. Disc brake (10) according to the preceding claim,
**characterized in that** the first portion (48) is of a diameter substantially equal to the diameter of the external groove (42) of the caliper (14).

5. Disc brake (10) according to one of Claims 1 to 4,
**characterized in that** the second insert (52) comprises an axially directed tubular ring (54) which is intended to stiffen the annular fixing exterior second bearing surface (40) of the bead (38) so that it can be fixed into the external groove (42) of the caliper (14).

6. Disc brake (10) according to any one of Claims 2 to 5, **characterized in that** the inserts (44, 52) are made of a metallic material.

## Patentansprüche

1. Scheibenbremse (10) für Kraftfahrzeug, vom Typ, der mindestens eine Scheibe (12) und einen der Scheibe zugeordneten Bremssattel (14) aufweist, der zwei gegenüberliegende Bremsklötze (16) aufnimmt, die dazu bestimmt sind, gegen gegenüberliegende Seiten (18, 20) der Scheibe (12) gespannt zu werden, wobei in einer Bohrung (22) von diesem mindestens ein Kolben (24) gleitend angebracht ist, der mindestens einen zugeordneten Bremsbelag (16) beaufschlagen kann, und vom Typ, der einen Staubschutzbalg (26) aufweist, der am Bremssattel (14) befestigt und in dichter Weise von dem Ende (28) des Kolbens (24) durchdrungen ist, um zu vermeiden, dass Staub in die dem Kolben (24) zugeordnete Bohrung (22) eindringt, und vom Typ, bei dem der Balg (26) mindestens an einem ersten Ende (30) eine erste Wulst (32) aufweist, von welcher eine erste ringförmige Befestigungsinnenfläche (34) in einer ringförmigen Nut (36) aufgenommen ist, die am Umfang des Endes (28) des Kolbens (24) gebildet ist, und an einem entgegengesetzten zweiten Ende (31) eine zweite Wulst (38) aufweist, von welcher eine zweite ringförmige Befestigungsaußenfläche (40) in einer äußere Nut (42) des Bremssattel (14) aufgenommen ist, die den Kolben (24) umgibt,
**dadurch gekennzeichnet, dass** die erste Wulst (32) mindestens einen ersten, im Elastomermaterial des Balgs (26) eingeschlossenen Einsatz (44) aufweist, der einen Hitzeschild gegenüber der beim Bremsen freigesetzten Hitze bildet, um einen Hitzestau innerhalb des Balgs (26) insbesondere dann zu vermeiden, wenn er in einer Stellung zum Beaufschlagen des Belags (16) ausgestreckt ist.

2. Scheibenbremse (10) nach dem vorhergehenden Anspruch, **dadurch gekennzeichnet, dass** die zweite Wulst (38) mindestens einen zweiten Verstärkungseinsatz (52) aufweist, der dazu bestimmt ist, die zweite ringförmige Außenfläche (40) zur deren Befestigung in der äußeren Nut (42) des Bremssattels (14) zu versteifen.

3. Scheibenbremse (10) nach einem der Ansprüche 1 oder 2, **dadurch gekennzeichnet, dass** der erste Einsatz (44) einen Ring aufweist, der einen ersten scheibenförmigen Abschnitt (48) mit Querausrichtung aufweist, welcher den Hitzeschild bildet, und einen zweiten rohrförmigen Abschnitt mit axialer Ausrichtung, der dazu bestimmt ist, die erste ringförmige Befestigungsinnenfläche (34) der Wulst (32) zur deren Befestigung in der ringförmigen Nut (36) des Endes (28) des Kolbens (24) zu versteifen.

4. Scheibenbremse (10) nach dem vorhergehenden Anspruch, **dadurch gekennzeichnet, dass** der Durchmesser des ersten Abschnitts (48) im Wesentlichen gleich dem Durchmesser der äußeren Nut (42) des Bremssattels (14) ist.

5. Scheibenbremse (10) nach einem der Ansprüche 1 bis 4, **dadurch gekennzeichnet, dass** der zweite Einsatz (52) einen rohrförmigen Ring (54) mit axialer Ausrichtung aufweist, der dazu bestimmt ist, die zweite ringförmige Befestigungsinnenfläche (40) der Wulst (38) für deren Befestigung in der äußeren Nut (42) des Endes (28) des Bremssattels (14) zu versteifen.

6. Scheibenbremse (10) nach einem der Ansprüche 2 bis 5, **dadurch gekennzeichnet, dass** die Einsätze (44, 52) aus einem Metall hergestellt sind.
